# EUROPÄISCHE PATENTSCHRIFT

(11) **EP 3 793 872 B1**
(45) Veröffentlichungstag und Bekanntmachung des Hinweises auf die Patenterteilung: **22.01.2025**
(21) Anmeldenummer: 19750075.4
(22) Anmeldetag: 24.07.2019
(51) Int. Cl.: B60T 8/18, B66F 9/075

(54) **FAHRZEUGKRAN MIT HYDROPNEUMATISCHER FEDERUNG UND EINEM WENIGSTENS ZWEI BREMSKREISE UMFASSENDEN BREMSSYSTEM**
VEHICLE CRANE WITH A HYDRO-PNEUMATICAL SUSPENSION AND WITH A BRAKE SYSTEM HAVING AT LEAST TWO BRAKE CIRCUITS
VÉHICULE-GRUE AYANT UN SYSTÈME DE SUSPENSION HYDRO-PNEUMATIQUE ET AUSSI UN SYSTÈME DE FREINS AVEC AU MOINS DEUX CIRCUITS DE FREINAGE

(30) Priorität: 25.07.2018 DE 102018117999; 16.08.2018 DE 102018119975
(43) Veröffentlichungstag der Anmeldung: 24.03.2021
(73) Patentinhaber: Tadano Demag GmbH, 66482 Zweibrücken (DE)
(72) Erfinder: RATHKE, Hans-Joachim, 66482 Zweibrücken (DE); SASSENBERGER, Jörg, 66386 St. Ingbert (DE)
(74) Vertreter: Moser Götze & Partner Patentanwälte mbB
(86) Internationale Anmeldenummer: PCT/EP2019/069978
(87) Internationale Veröffentlichungsnummer: WO 2020/020977

(56) Entgegenhaltungen:
- DE-A1- 2 622 534
- JP-A- S6 025 810
- US-A- 4 986 609

## Beschreibung

Die Erfindung betrifft einen Fahrzeugkran mit hydropneumatischer Federung und mit einem Radbremsen umfassenden Bremssystem, welches einen den Radbremsen mindestens einer Fahrzeugachse des Fahrzeugkrans zugeordneten ersten Bremskreis und wenigstens einen den Radbremsen mindestens einer weiteren Fahrzeugachse des Fahrzeugkrans zugeordneten weiteren Bremskreis besitzt.

Um die Zulassung eines Fahrzeugkrans zum öffentlichen Straßenverkehr zu erhalten, muss dieses die jeweils länderspezifischen Anforderungen erfüllen. Voraussetzung hierfür ist zumeist eine Typgenehmigung, eine allgemeine Betriebserlaubnis oder eine mittels Gutachten individuell zu erlangende Einzelbetriebserlaubnis. Dies gilt nicht nur für zum Personen- und/oder Gütertransport ausgebildete Kraftfahrzeuge, sondern auch für Sonderfahrzeuge wie etwa Fahrzeugkrane, deren unterschiedlichen Einsatzorte bekanntermaßen zumeist über das öffentliche Straßennetz erreicht werden. Als autonom angetriebene Fahrzeuge bedürfen deren Radfahrwerke eines geeigneten Bremssystems sowie einer geeigneten Federung. Mit Geltung für die Europäische Union und darüber hinaus legen UN Regelungen einzuhaltende Anforderungen fest, von denen beispielsweise ECE R 13 die Vorschriften für Bremssysteme enthält.

Konventionelle Federungssysteme setzen zumeist auf mechanische Federn, deren Schwingungen über Teleskopstoßdämpfer gedämpft werden. Demgegenüber kombinieren hydropneumatische Federungssysteme die Funktionen aus Federn und Dämpfer in mit Hydraulik und Pneumatik betriebenen Dämpfereinheiten. Diese weisen einen Hydraulikzylinder auf, der beispielsweise zwischen einem Rahmen und einer demgegenüber beweglichen Fahrzeugachse oder einem demgegenüber beweglichen Rad des Fahrzeugkrans eingegliedert ist. Die mit Öl befüllten Hydraulikzylinder sind mit jeweils einem als Speicher dienenden Druckgefäß fluidleitend verbunden. Der Speicher ist mittels einer Membran in zwei Kammern unterteilt, wobei die dem Hydraulikzylinder zugewandte Kammer mit Öl und die verbleibende Kammer mit Gas befüllt ist. Aufgrund seiner Komprimierbarkeit agiert das Gas dabei als Federungselement, während das beim Federvorgang verdrängbare Öl der Dämpfung dient. Gegenüber bei mechanisch gefederten Fahrzeugen mit steigendem Gewicht absinkendem Niveau (lastabhängige Bodenfreiheit), gestatten hydropneumatische Federungssysteme ein demgegenüber lastunabhängiges Niveau durch Veränderung des Ölvolumens im Speicher der jeweiligen Dämpfereinheit.

Mit der deutschen Gebrauchsmusterschrift DE 20 2007 004 091 U1 ist hierzu ein Fahrzeugkran bekannt geworden, welches eine solche hydropneumatische Federung besitzt. Die hydropneumatische Federung ist vorwiegend dann aktiv, wenn der Fahrzeugkran im Straßenverkehr bewegt wird. Im stationären Einsatz sind dessen federnden Eigenschaften blockierbar, während der weiterhin beispielsweise pro Achse mögliche Niveauausgleich des Fahrzeugkrans auch dessen sichere Aufstellung auf einem mit Gefälle behaftetem Untergrund ermöglicht. Weiterhin weist der Fahrzeugkran ein Bremssystem auf, dessen vorschriftsmäßige Ausgestaltung die Anordnung von zwei voneinander unabhängigen Bremskreisen verlangt.

Um etwa die in der deutschen Straßenverkehrs-Zulassungs-Ordnung festgelegten Bau- und Betriebsvorschriften zu erfüllen, müssen Fahrzeuge über eine Bremsanlage mit vorgeschriebenen Verzögerungswerten verfügen. Insbesondere bei großen und insofern schweren Sonderfahrzeugen, wie beispielsweise Fahrzeugkranen, sind entsprechend hohe Anforderungen an die Ausgestaltung des Bremssystems zu stellen. Das Bewegen von Fahrzeugen auf dem öffentlichen Straßennetz erfordert die Einhaltung einer maximalen Achslast, wobei insbesondere das Überfahren von Brücken auf ein maximales Fahrzeuggewicht beschränkt ist. Überschreiten die tatsächliche Achslast oder das zulässige Fahrzeuggewicht die jeweils zulässigen Werte, müssen diese entsprechend reduziert werden. Zur Erfüllung der behördlichen Vorschriften müssen beispielsweise Fahrzeugkrane mitunter so konzipiert sein, dass wenigstens eine ihrer Baugruppen demontierbar ist. Das so erheblich beeinflussbare Gesamtgewicht des dann im Straßenverkehr beweglichen restlichen Fahrzeugs wirkt sich entsprechend stark auf dessen Bremsleistung und insofern auf die Frage nach der jeweils richtigen Ansteuerung des Bremssystems aus, um die behördlichen Vorgaben zu erfüllen. Selbiges gilt für andere Fahrzeuge, deren jeweiliger Beladungszustand beispielsweise durch Aufnahme oder Abladen von zu transportierenden Gütern entsprechenden Schwankungen unterliegt. Insbesondere angesichts deren Zulassungsfrage im Hinblick auf deren Bremssystem bieten die bisher bekannten derartigen Fahrzeuge daher noch Raum für Verbesserungen.

Des Weiteren ist aus der Offenlegungsschrift DE 26 22 534 A1 eine lastabhängige hydraulische Vierkreisbremsanlage eines Nutzfahrzeuges mit einer hydropneumatischen Federung bekannt. Jedem Federbein der hydropneumatischen Federung ist hierbei ein Bremsdruckregulierventil zugeordnet. Ein Druckanstieg in dem Federbein wird hier zur Druckerhöhung in dem zugeordneten Bremszylinder über das Bremsdruckregulierventil genutzt. Eine Hydraulikpumpe stellt den nicht beeinflussten Bremsdruck zur Verfügung. Die hydropneumatische Federung und die hydraulische Bremse sind somit über das Bremsdruckregulierventil fluidtechnisch miteinander verbunden. Für die Druckerhöhung fließt Öl von der hydropneumatischen Federung in die hydraulische Bremsanlage.

Ferner ist in der japanischen Offenlegungsschrift JP S60 25810 A ein Fahrzeug mit einer hydropneumatischen Federung beschrieben. In üblicher Weise sieht die hydropneumatische Federung je Rad des Fahrzeugs einen hydraulischen Federungszylinder und einen Druckspeicher auf. Um den Federungskomfort zu verbessern und ein seitliches Wanken des Fahrzeugs zu minimieren, ist die Federungskonstante des Druckspeichers über eine Veränderung dessen Luftvolumens einstellbar. Hierfür ist je Rad im Bereich der hydraulischen Federungszylinder jeweils ein Lastsensor angeordnet, dessen Signal für die Veränderung dessen Luftvolumens ausgewertet wird.

Auch ist aus der Patentschrift US 4 986 609 A ein Personenkraftwagen mit einem hydraulischen Bremssystem mit zwei Bremskreisen bekannt. Das hydraulische Bremssystem umfasst ein Dosier-Ventilsystem, um einen Bremsdruck der Vorder- und Hinterradbremse in Abhängigkeit von der Last auf den Hinterrädern anzupassen. Hierfür ist das Dosier-Ventilsystem mit einem Lastsensor verbunden, über den eine Last auf die Hinterräder gemessen werden kann.

Der Erfindung liegt die Aufgabe zugrunde, einen mit einer hydropneumatischen Federung ausgestatteten Fahrzeugkran dahingehend weiterzuentwickeln, dass die Ansteuerung seines Bremssystems an den jeweiligen Gewichtszustand des Fahrzeugkrans, bevorzugt stufenlos, anpassbar ist.

Die Lösung dieser Aufgabe besteht nach der Erfindung in einem Fahrzeugkran, mit den Merkmalen von Anspruch 1. In den jeweils abhängigen Ansprüchen 2 bis 14 sind vorteilhafte Ausgestaltungen der Erfindung angegeben.

Hiernach umfasst der erfindungsgemäße Fahrzeugkran mindestens einen automatisch lastabhängigen Bremskraftregler (ALB), welcher mit der hydropneumatischen Federung des Fahrzeugkrans gekoppelt ist. Dabei ist der automatisch lastabhängige Bremskraftregler zumindest abschnittsweise mit einem der Bremskreise des Bremssystems wirkverbunden. Abschnittsweise meint hierbei, dass der automatisch lastabhängige Bremskraftregler entweder mit einem gesamten Bremskreis oder nur mit einem Abschnitt, insofern mit wenigstens einem Bremskreisabschnitt eines Bremskreises wirkverbunden sein kann. Automatisch lastabhängiger Bremskraftregler und Bremskreis oder Bremskreisabschnitt sind dabei derart miteinander wirkverbunden, dass auf Basis eines aus der hydropneumatischen Federung erzeugbaren Gewichtszustandssignals des Fahrzeugkrans ein innerhalb des mit dem automatisch lastabhängigen Bremskraftregler gekoppelten Bremskreises oder Bremskreisabschnitts erzeugbarer Bremsdruck gegenüber einem zeitgleich innerhalb des anderen Bremskreises oder Bremskreisabschnitts erzeugbaren Bremsdruck veränderbar ist. Hiernach ist es nunmehr möglich, dass besagte Bremsdrücke in Teilen des Bremssystems aufgrund eines veränderten Gesamtgewichts des Fahrzeugkrans voneinander unterschiedliche Werte aufweisen können. Mit anderen Worten sorgt der automatisch lastabhängige Bremskraftregler dafür, dass der im zumindest abschnittsweise mit dem automatisch lastabhängigen Bremskraftregler gekoppelten - und insofern regelbaren - Bremskreis oder Bremskreisabschnitt erzeugbare Bremsdruck in Abhängigkeit des jeweiligen Gewichtszustands des Fahrzeugkrans von dem zeitgleich im anderen Bremskreis oder Bremskreisabschnitt erzeugbaren Bremsdruck verändert sein kann. Aufgrund der nun möglichen Regelung der bei einer Veränderung des Gesamtgewichts des Fahrzeugkrans bisher gleichbleibenden Bremsdrücke in Teilen des Bremssystems ist eine vorteilhafte Anpassung an die unmittelbar aus der Gewichtsveränderung resultierenden fahrdynamischen Kräfte möglich. Hierbei ist zu berücksichtigen, dass der Betriebsdruck der Bremsanlage in üblicher Weise auf das maximale zulässige Gesamtgewicht des Fahrzeugkrans abgestimmt ist und der zur Verfügung stehende pneumatische Bremsdruck nicht erhöht werden kann. Der erfindungsgemäß eingesetzte automatisch lastabhängige Bremskraftregler verhindert somit erfolgreich ein Überbremsen des Fahrzeugkrans, sollte dieser ein niedrigeres Fahrzeuggewicht durch Demontage von Kranteilen aufweisen. Die Erfindung sieht auch vor, dass der innerhalb des mit dem automatisch lastabhängigen Bremskraftregler gekoppelten Bremskreises oder Bremskreisabschnitts erzeugbare, insbesondere auf die zugehörigen Räder wirkende, Bremsdruck ohne eine Veränderung durch den automatisch lastabhängigen Bremskraftregler dem zeitgleich innerhalb des anderen Bremskreises und/oder Bremskreisabschnitts erzeugbaren Bremsdrucks entspricht. In diesem Zusammenhang ist vorgesehen, dass der innerhalb des mit dem automatisch lastabhängigen Bremskraftregler gekoppelten Bremskreises oder Bremskreisabschnitts erzeugbare Bremsdruck dann durch den automatisch lastabhängigen Bremskraftregler gegenüber dem Wert des innerhalb des anderen Bremskreises und/oder Bremskreisabschnitts zeitgleich erzeugbaren Bremsdrucks regelbar ist. Regelbar meint hierbei, dass der jeweilige Bremsdruck durch den automatisch lastabhängigen Bremskraftregler entsprechend reduzierbar ist. Der sich hieraus ergebende Vorteil ist in einer nunmehr möglichen, überaus vorteilhaften Anpassung der Bremskraftverteilung innerhalb der einzelnen Bremskreise oder Bremskreisabschnitte des Bremssystems in Abhängigkeit eines sich verändernden Fahrzeugkrangewichts zu sehen. Da besagte Anpassung ohne bewusstes Eingreifen durch eine den Fahrzeugkran bedienende Person erfolgt, liegt somit stets eine an den jeweiligen Gewichtszustand des Fahrzeugkrans in angemessener Weise an die Radbremsen des Bremssystems verteilte Bremskraft vor. Ohne eine solche Bremskraftverteilung würde beispielsweise die oder wenigstens eine der Hinter- oder Vorderachse/n auch im gewichtsreduzierten Zustand, beispielsweise aufgrund der Demontage einer Baugruppe des Fahrzeugkrans, bei einer Teilbremsung mit dem gleichen Druck wie die jeweils andere/n Achse/n angesteuert. So könnten die Hinter- und/oder Vorderräder blockieren und der Fahrzeugkran unkontrollierbar ausbrechen. Selbiges gilt auch für einen Fahrzeugkran mit mehr als zwei Fahrzeugachsen, bei denen zwei oder mehr Fahrzeugachsen zu je einem der Bremskreise oder Bremskreisabschnitte zugehörig sind. Die erfindungsgemäße lastabhängige Bremskraftregelung sorgt beispielsweise für eine Minderung des Bremsdrucks in den Radbremsen an wenigstens einer Fahrzeugachse; abhängig vom jeweiligen Gewichtszustand des Fahrzeugkrans. Umgekehrt kann der Bremsdruck an wenigstens einer Fahrzeugachse bei gewissen Gewichtszuständen den Bremsdruck an wenigstens einer anderen Fahrzeugachse übersteigen.

Gemäß einer bevorzugten Weiterbildung des grundsätzlichen Erfindungsgedankens kann an dem automatisch lastabhängigen Bremskraftregler ein Regelungseingang angeordnet sein. Angeordnet meint, dass der Regelungseingang beispielsweise materialeinheitlich einstückiger Bestandteil des automatisch lastabhängigen Bremskraftregler, insbesondere dessen Gehäuse, sein kann oder aber als separates Bauteil mit diesem verbunden sein kann. In jedem Fall ist der Regelungseingang so ausgebildet und angeordnet, dass dieser eine fluidleitende Verbindung mit dem automatisch lastabhängigen Bremskraftregler im Sinne eines Anschlusses ermöglicht. Dabei ist der Regelungseingang derart fluidleitend mit der hydropneumatischen Federung des Fahrzeugkrans gekoppelt, dass deren jeweiliger Druck als das zur Ansteuerung des automatisch lastabhängigen Bremskraftreglers dienende Gewichtszustandssignal verwendbar ist. Auf diese Weise kann der jeweilige Druck der hydropneumatischen Federung in vorteilhafter Weise eine direkte Stellgröße für die Verteilung des Bremsdrucks innerhalb der Bremskreise oder Bremskreisabschnitte des Bremssystems darstellen.

Hierbei ist bevorzugt vorgesehen, dass dem Regelungseingang mindestens ein Federungskreis der hydropneumatischen Federung zugeordnet ist und dieser mindestens eine Federungskreis auch zumindest einen Teil der Fahrzeugachsen zugeordnet ist, die dem jeweiligen automatisch lastabhängigen Bremskraftregler also dem zugehörigen Bremskreis beziehungsweise Bremskreisabschnitt zugeordnet sind. In diesem Zusammenhang ist weiterhin bevorzugt, dass der mindestens eine Federungskreis genau den Fahrzeugachsen zugeordnet ist, die dem jeweiligen automatisch lastabhängigen Bremskraftregler also dem zugehörigen Bremskreis beziehungsweise Bremskreisabschnitt zugeordnet sind.

Im konkreten Anwendungsfall kann so auf Basis des jeweiligen Gewichtszustands des Fahrzeugkrans eine quasi in Echtzeit erfolgende, beispielsweise proportionale Veränderung in der Verteilung des jeweiligen Bremsdrucks auf die Bremskreise oder Bremskreisabschnitte erfolgen, um insbesondere ein ineffektives Überbremsen der an einen Bremskreis oder Bremskreisabschnitt angeschlossenen Radbremsen einer oder mehrerer Fahrzeugachsen wirksam zu unterbinden.

Grundsätzlich kann bereits in einer Grundeinstellung des Bremssystems vorgesehen werden, dass in allen Bremskreisen oder Bremskreisabschnitten der gleiche Bremsdruck ansteht, jedoch angepasst an den Fahrzeugkran und dessen Gewichtsverteilung in den Radbremsen der vorderen, mittleren und hinteren Achse voneinander abweichende Bremskräfte zur Verfügung stehen. Hierfür weisen dann die Radbremsen eine Ausgestaltung und/oder Anzahl auf, die hinsichtlich der jeweiligen Bremsleistung eine vorteilhafte Verteilung der Bremskraft, insbesondere beim maximalen Gesamtgewicht des Fahrzeugkrans beziehungsweise den maximal zulässigen Achslasten besitzen. Dies kann beispielsweise durch die Anzahl der jeweiligen Bremssättel und/oder die Größe ihrer Bremszylinder erfolgen. Das bei Demontage wenigstens einer Baugruppe entsprechend abnehmende Gewicht des Fahrzeugkrans kann dann zum Anlass genommen werden, den wirksamen Druck in einem der Bremskreise und/oder einem der Bremskreisabschnitte zu reduzieren. Die ansonsten für das maximale Fahrzeugkrangewicht vorgesehene bauliche Ausgestaltung bleibt insofern unberührt, so dass die Bremskraftanpassung über den automatisch lastabhängigen Bremskraftregler erfolgt.

Durch eine entsprechende Auslegung des Bremssystems kann dabei auch dem naturgemäßen Umstand Rechnung getragen werden, dass beim Abbremsen eines Fahrzeugkrans dessen Gewicht zunehmend auf die vorderen Räder wirkt, während die hinteren Räder zeitgleich eine Entlastung in Bezug auf das über diese in den Untergrund abzuleitende Fahrzeugkrangewicht erfahren. Aus diesem Grund ist die Effektivität in der Verzögerung der Vorderräder in der Regel höher als die der Hinterräder, da letztere aufgrund der Entlastung schneller ins Blockieren geraten und so kaum mehr zum eigentlichen Abbremsen des Fahrzeugkrans beitragen können.

Alternativ kann eine Grundeinstellung des Bremssystems vorgesehen werden, bei der die in den Bremskreisen oder Bremskreisabschnitten anliegenden Bremsdrücke voneinander abweichen, um eine vorteilhafte Verteilung der Bremskräfte, insbesondere beim maximalen Gesamtgewicht des Fahrzeugkrans beziehungsweise den maximal zulässigen Achslasten, auf die einzelnen Radbremsen zu erreichen.

Im Rahmen der Erfindung wird es als besonders vorteilhaft angesehen, wenn der automatisch lastabhängige Bremskraftregler ansteuerungsseitig an die hydropneumatische Federung angeschlossen ist und einen Regelbereich bis maximal 160 bar, bevorzugt 200 bar, aufweist. Der vorgenannte Regelbereich ist auf einen Fahrzeugkran im Straßenfahrbetrieb abgestimmt. Diese gegenüber üblichen automatisch lastabhängige Bremskraftreglern unübliche hohe Druckauslegung des automatisch lastabhängige Bremskraftreglers selbst ist vorteilhaft, da insbesondere bei Fahrzeugkranen eingesetzte Federungssysteme mit beispielsweise gegenüber sonstigen Personen- oder Lastkraftwagen deutlich höherem Betriebsdruck betrieben werden. Dieser ist aufgrund des sehr hohen Fahrzeugkrangewichts notwendig, um die entsprechend ausgelegten Dämpfereinheiten der hydropneumatischen Federung den Anforderungen nach ansteuern zu können. Gegenüber dem Einsatz möglicher Druckübersetzer im Zusammenhang mit der Nutzung eines für geringere Drücke ausgelegten automatisch lastabhängigen Bremskraftreglers ergibt sich so ein kompakterer und mit weniger Teilen auskommender Aufbau.

Für die Ausbildung des automatisch lastabhängigen Bremskraftreglers außerhalb beziehungsweise oberhalb seines Regelbereichs könnte als mögliche Druckbeaufschlagung aus der hydropneumatischen Federung ein Wert von maximal 250 bar, bevorzugt von maximal 300 bar, insbesondere von maximal 350 bar angegeben werden. Diese Druckfestigkeit ermöglicht einen Fahrzeugkran auch außerhalb des Straßenfahrbetriebes im Kranfahrbetrieb und somit beim Verfahren im aufgerüsteten Zustand und/oder unter Last zu betreiben. Alternativ kann vorgesehen sein, anstatt den gesamten automatisch lastabhängigen Bremskraftregler druckfest auszugestalten, diesem ein Schutzventil mit entsprechenden Druckfestigkeiten vorzuschalten, das bei Drücken über 160 bar beziehungsweise 200 bar sperrt.

Nach einer bevorzugten Weiterentwicklung des erfindungsgemäßen Fahrzeugkrans kann der mit dem automatisch lastabhängigen Bremskraftregler wirkverbundene Bremskreis oder Bremskreisabschnitt einer oder mehreren Fahrzeugachsen zugeordnet sein. Weiterhin kann der andere Bremskreis oder Bremskreisabschnitt mindestens einer, vorzugsweise zwei oder mehr, weiteren Fahrzeugachse/n zugeordnet sein. Insbesondere bei einem mehrachsigen Fahrzeugkran kann so eine in Bezug auf dessen Ausgestaltung und/oder bauliche Gewichtsverteilung optimale Ansteuerung der einzelnen Fahrzeugachsen hinsichtlich der Bremsleistung an den einzelnen Rädern erfolgen. In entsprechender Weise können somit einem oder mehreren Bremskreisen oder Bremskreisabschnitten jeweils ein automatisch lastabhängige Bremskraftregler zugeordnet werden. Die Anzahl und Anordnung der Bremskreise oder Bremskreisabschnitte ist abhängig von der Art des Fahrzeugkrans, dessen Anzahl der Achsen und dessen Gewichtsverteilung. Je nach Fahrzeugkran kann somit der mindestens eine automatisch lastabhängige Bremskraftregler jedem Bremskreis oder Bremskreisabschnitt zugeordnet werden, egal ob dieser vorderen, mittleren oder hinteren Achsen des Fahrzeugkranes zugeordnet ist. Ein Anhaltspunkt für die Anzahl und Zuordnung der automatisch lastabhängigen Bremskraftregler zu den Bremskreisen kann eine Vorausbetrachtung des Einflusses einer möglichen Reduzierung des Fahrzeugkrangewichts, durch beispielsweise Demontage eines Teleskopauslegers für die Straßenfahrt, auf die jeweilige Achsbelastung sein.

In diesem Zusammenhang kann der erfindungsgemäße Fahrzeugkran beispielsweise zwei bis insgesamt beispielsweise zehn einzelne Fahrzeugachsen aufweisen. Hierbei kann der mit dem automatisch lastabhängigen Bremskraftregler wirkverbundene Bremskreis oder Bremskreisabschnitt einer oder mehreren Fahrzeugachsen zugeordnet sein, während der andere Bremskreis und/oder Bremskreisabschnitt den verbleibenden Fahrzeugachsen zugeordnet ist. Aufgrund der Anzahl und gezielten Einteilung der Fahrzeugachsen auf die Bremskreise und/oder Bremskreisabschnitte ergibt sich eine überaus vorteilhafte Ansteuerung der Radbremsen des Bremssystems hinsichtlich der unterschiedlichen Verteilung des Bremsdrucks auf diese Bremskreise und/oder Bremskreisabschnitte.

Grundsätzlich kann der automatisch lastabhängige Bremskraftregler bevorzugt mit wenigstens dem einen Bremskreis oder Bremskreisabschnitt wirkverbunden sein, dessen mindestens eine über diesen gebremste Achse des Fahrzeugkrans bei einer Reduzierung des Fahrzeugkrangewichts die größten negativen Auswirkungen aufweist. Dieser Umstand ist individuell und von der jeweiligen Ausgestaltung des Fahrzeugkrans und insbesondere der Lage der zur Demontage vorgesehenen wenigstens einer Baugruppe abhängig.

Besonders bevorzugt kann die hydropneumatische Federung des erfindungsgemäßen Fahrzeugkrans eine Niveauregulierung aufweisen. Hierbei kann beispielsweise durch eine Volumenänderung des Öls in dem zugehörigen Federungskreis Einfluss auf die Eintauchtiefe eines Kolbens in den Hydraulikzylinder genommen werden, was eine Höhenänderung des Federungssystems und damit eine Niveauveränderung des Fahrzeugkrans ermöglicht. Eine derartige Niveauregulierung ermöglicht eine bevorzugt radweise, insbesondere achsweise, Anpassung an den jeweiligen Untergrund. Dies in Bezug auf den in Fahrt befindlichen und/oder im Stillstand begriffenen Fahrzeugkran.

Gemäß einer vorteilhaften Weiterbildung kann die hydropneumatische Federung des erfindungsgemäßen Fahrzeugkrans einen Achslastausgleich innerhalb eines seiner Federungskreise aufweisen. Besagter Achslastausgleich kann zumindest zwischen gelenkten und/oder ungelenkten Fahrzeugachsen zum Ausgleich deren Achslasten wirksam sein. Ein derartiger Achslastausgleich verbessert aufgrund der so möglichen Gewichtsverteilung zwischen zwei oder mehr Fahrzeugachsen, insbesondere abseits befestigter Untergründe, den Fahrkomfort sowie die Traktion. Weiterhin lässt sich auf diese Weise auch eine weitere Verbesserung hinsichtlich des Überbremsens einer einzelnen oder mehrerer Fahrzeugachse/n erreichen. Die hierdurch mögliche Reduktion dynamischer Achslastschwankungen reduziert zudem in vorteilhafter Weise die Belastung des jeweiligen mit dem Fahrzeugkran zu befahrenden Untergrunds, insbesondere der Straße. Insgesamt lässt der Achslastausgleich eine weitestgehende Kompensation einer möglichen Längswelligkeit des zu befahrenden Untergrunds zu.

Die Erfindung sieht vor, dass der Fahrzeugkran auch zwei oder mehr automatisch lastabhängige Bremskraftregler aufweisen kann. In diesem Fall ist jeder dieser automatisch lastabhängigen Bremskraftregler mit einem der Bremskreise oder Bremskreisabschnitte gekoppelt. Durch den Einsatz von mehr als einem automatisch lastabhängige Bremskraftregler lässt sich eine verbesserte Anpassung der jeweiligen Bremsdrücke erreichen. Dies insbesondere vor dem Hintergrund einer sich bei Demontage einer oder mehrerer Baugruppen des Fahrzeugkrans mitunter stark verändernden Gewichtsverteilung seines verbleibenden Gesamtgewichts. So kann beispielsweise nur der vordere oder der hintere Bremskreis oder ein entsprechender Bremskreisabschnitt von diesen mit einem automatisch lastabhängige Bremskraftregler gekoppelt sein. Alternativ hierzu können beide Bremskreise oder entsprechende Bremskreisabschnitte von diesen mit einem automatisch lastabhängige Bremskraftregler gekoppelt sein. Die Anordnung von einem oder mehreren automatisch lastabhängige Bremskraftreglern gilt selbstverständlich auch dann entsprechend, wenn der Fahrzeugkran mehr als zwei Bremskreise in Bezug auf seine Betriebsbremse aufweisen sollte.

Im Zusammenhang mit der Anordnung von zwei oder mehr automatisch lastabhängigen Bremskraftreglern können diese gleich oder voneinander unterschiedlich eingestellt sein. Dies insbesondere in Bezug auf deren Regelung und/oder Ansprechverhalten. Auf diese Weise können in vorteilhafter Weise die sich aus der jeweiligen Ausgestaltung des Fahrzeugkrans ergebenden Anforderungen an eine solche Bremsdruckregelung erfüllt werden. So kann sich die jeweilige Gewichtsverteilung in Bezug auf den Fahrzeugkran nach Demontage wenigstens einer seiner Baugruppen mitunter bauartbedingt voneinander unterscheiden, was durch eine gezielte Anordnung sowie Einstellung und Einbindung in das Bremssystem entsprechend berücksichtigt werden kann, um bestmögliche Ergebnisse in Bezug auf das Bremsverhalten zu erreichen.

Der nunmehr vorgestellte erfindungsgemäße Fahrzeugkran ermöglicht die überaus einfache und effektive Anpassbarkeit der Ansteuerung seines Bremssystems an dessen jeweiligen Gewichtszustand. Durch die Eingliederung wenigstens eines entsprechend ausgelegten automatisch lastabhängigen Bremskraftreglers zwischen einem der zu regelnden Bremskreise oder einem ihrer zu regelnden Bremskreisabschnitte und der hydropneumatischen Federung ist besagte Anpassbarkeit automatisiert und bevorzugt stufenlos durchführbar, was eine immer optimale Verteilung des Bremsdrucks innerhalb der einzelnen Bremskreise und/oder deren Bremskreisabschnitte und der damit verbundenen Fahrzeugachsen bzw. Radbremsen ermöglicht. Sich bei einem veränderten Gewichtszustand ansonsten schnell einstellende Missverhältnisse hinsichtlich der Bremskraftverteilung und ein damit einhergehendes Überbremsen wenigstens einer einzelnen Fahrzeugachse sind durch die erfindungsgemäße Ausgestaltung quasi ausgeschlossen. Gegenüber mitunter möglichen manuellen Veränderungen in Bezug auf die Bremskraftverteilung erlaubt der erfindungsgemäße Fahrzeugkran eine automatisierte und damit sicherere Anpassung. Eine sonst mögliche Fehlbedienung bei manueller Umstellung mit entsprechenden Konsequenzen ist damit nahezu ausgeschlossen.

In bevorzugter Weise ist vorgesehen, dass das Bremssystem pneumatisch ist.

Die vorliegende Erfindung eignet sich besonders für Fahrzeugkrane die mindestens drei Fahrzeugachsen aufweisen.

Außerdem ist bevorzugt vorgesehen, dass die Anzahl der Bremskreise oder Bremskreisabschnitte größer ist als die Anzahl der automatisch lastabhängigen Bremskraftregler. Mit anderen Worten, dass einem Bremskreis oder Bremskreisabschnitt kein automatisch lastabhängiger Bremskraftregler zugeordnet ist und somit dort immer der volle Bremsdruck ansteht.

Ein Ausführungsbeispiel der Erfindung wird anhand der nachfolgenden Beschreibung der einen erfindungsgemäßen Fahrzeugkran mit acht Fahrzeugachsen zeigenden Figuren näher erläutert. Es zeigen:
Figur 1 ein schematisches Schaubild eines Bremssystems eines erfindungsgemäßen Fahrzeugkrans,
Figur 2 das Schaubild gemäß Figur 1 mit einem mittels dick dargestellter Linien hervorgehobenem ersten Bremskreis und
Figur 3 das Schaubild gemäß Figur 1 mit einem mittels dick dargestellter Linien hervorgehobenem und dabei in zwei Bremskreisabschnitte aufgeteilten zweiten Bremskreis.

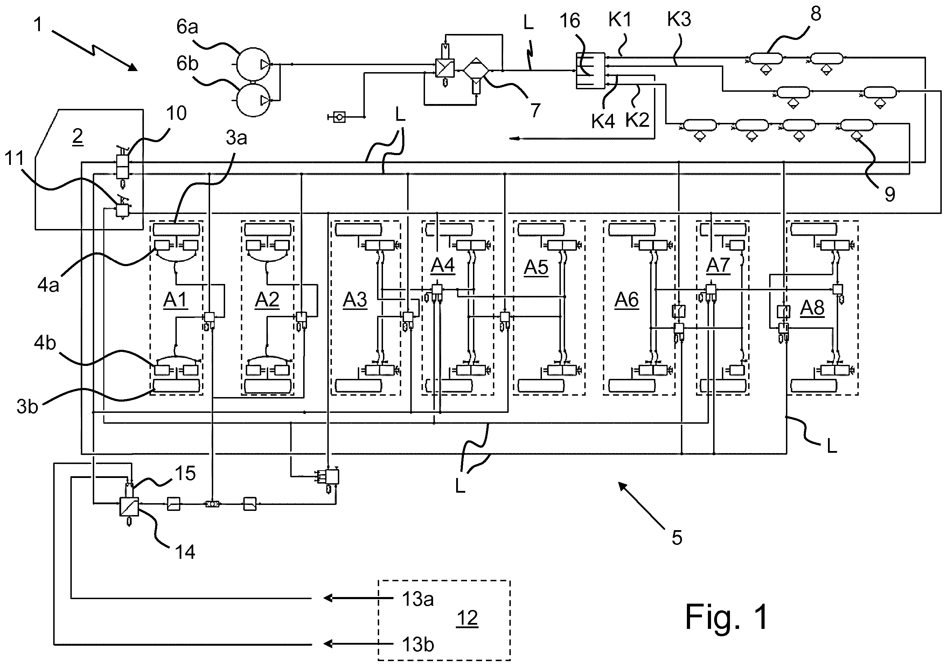

Figur 1 zeigt einen erfindungsgemäßen Fahrzeugkran 1, welcher ein Radfahrwerk mit hier beispielhaft gezeigten, insgesamt acht parallel zueinander beabstandeten Fahrzeugachsen A1 - A8 umfasst. Eine Fahrzeugkabine 2 deutet auf den vorderen Teil des Fahrzeugkrans 1 hin. Aufgrund der Darstellung wird deutlich, dass beispielsweise die an die Fahrzeugkabine 2 angrenzende Fahrzeugachse A1 die vorderste der vorderen Fahrzeugachsen A1 bis A5 verkörpert, während von den weiteren hinteren Fahrzeugachsen A6 bis A8 deren am gegenüberliegenden Ende gelegene und insofern am weitesten von der vordersten Fahrzeugachse A1 entfernte Fahrzeugachse A8 die hinterste Fahrzeugachse A8 des Fahrzeugkrans 1 ist. Jede dieser acht Fahrzeugachsen A1 bis A8 weist zwei sich gegenüberliegende und drehbar an diesen gelagerte Räder 3a, 3b auf und somit jeweils ein rechtes Rad 3a sowie ein zugehöriges linkes Rad 3b. Jedem dieser Räder 3a, 3b ist eine entsprechende rechte Radbremse 4a oder eine entsprechend linke Radbremse 4b zugeordnet, um deren freie Drehbarkeit bedarfsweise zu verzögern bis hin zu unterbinden. Erkennbar sind die beiden vorderen Fahrzeugachsen A1, A2 in dem hier gezeigten Beispiel mit jeweils zwei Radbremsen 4a, 4b beziehungsweise Bremszangen ausgestattet (Doppelsattelbremsen), um bereits baulich einen gegenüber den anderen Fahrzeugachsen A3 bis A8 erhöhte Bremswirkung zu erzielen, die auf die maximal zulässigen Achslasten abgestimmt ist. Demgegenüber handelt es sich bei den weiteren Radbremsen 4a, 4b vorliegend um Einfachsattelbremsen.

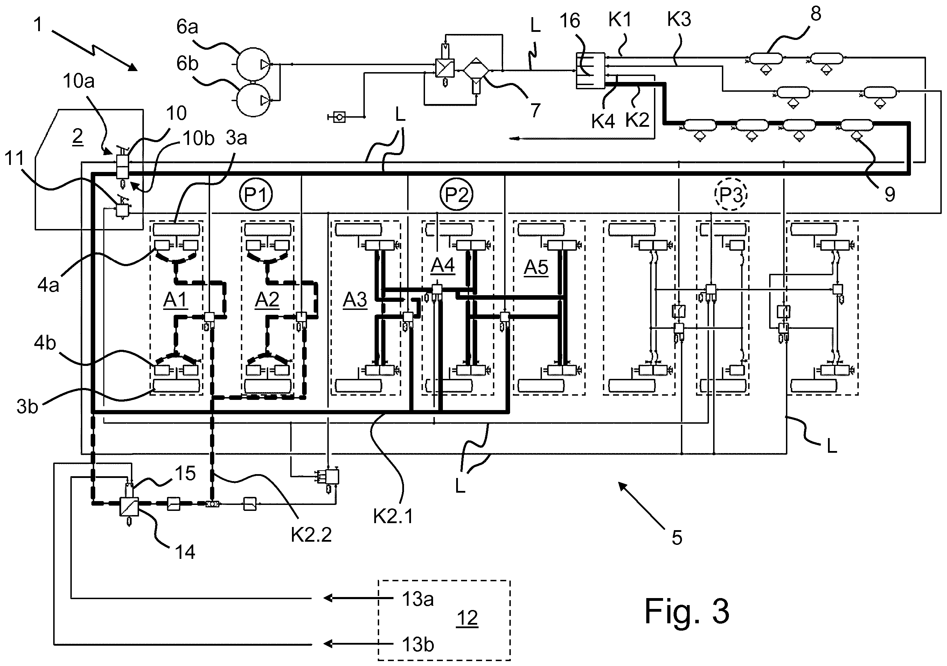

Die Radbremsen 4a, 4b sind Teil eines pneumatischen Bremssystems 5, dessen einzelnen Komponenten über eine Vielzahl an Pneumatikleitungen L fluidleitend miteinander verbunden sind. Zu diesen Komponenten zählen, im vorliegend gezeigten Beispiel zwei, Pneumatikpumpen 6a, 6b, die unter Zwischenschaltung eines Lufttrockners 7 und ein Schutzventil 16 zum Befüllen von mit jeweils einem Abscheider 9 ausgestatteten Luftbehältern 8 mit Luft vorgesehen sind. Die Luftbehälter 8 dienen als pneumatische Druckspeicher, um den jeweils notwendigen pneumatischen Druck zum Betrieb der Radbremsen 4a, 4b zur Verfügung zu stellen. Das Bremssystem 5 weist primär zwei voneinander getrennte Bremskreise K1, K2 (Betriebsbremsen) im Sinne eine Zweikreisbremsanlage mit zwei Betriebs-Bremskreisen für die somit zwei baulich voneinander getrennten Betriebsbremsen des Fahrzeugkrans 1 auf. Die Radbremsen 4a, 4b einer Fahrzeugachse A1 bis A8 sind dabei jeweils einem dieser beiden Bremskreise K1, K2 zugeordnet. Besagte Bremskreise K1, K2 umfassen einen hinteren Bremskreis K1 und einen vorderen Bremskreis K2. Der vordere Bremskreis K2 ist dabei in einen ersten vorderen Bremskreisabschnitt K2.1 und einen zweiten vorderen Bremskreisabschnitt K2.2 unterteilt, wie im weiteren Verlauf insbesondere zu Figur 3 noch näher erläutert. Die Bremskreise K1, K2 sind mit einem in der Fahrzeugkabine 2 angeordneten und als Fußbremse agierenden Bremspedal 10 gekoppelt, so dass über dessen Betätigung sämtliche Radbremsen 4a, 4b entsprechend aktivierbar sind. Weiterhin ist in der Fahrzeugkabine 2 ein Hebel 11 vorgesehen, welcher der Betätigung einer baulich dritten Bremse in Form einer Feststellbremse dient. Dessen fluidleitende Verbindung zu einigen der als Federspeicher Bremszylinder ausgebildeten Radbremsen 4a, 4b erfolgt über einen von den zwei Bremskreisen K1, K2 der Betriebsbremsen getrennten dritten Bremskreis K3 für eine Feststellbremse. Ein weiterer, in Figur 1 nur angedeuteter Druckkreis K4 dient der nicht näher gezeigten Versorgung von Nebenverbrauchern.

Weiterhin verfügt der Fahrzeugkran 1 über eine zur Wahrung der Übersichtlichkeit nicht im Detail, sondern nur symbolisch dargestellte hydropneumatische Federung 12, die in nicht näher gezeigter Weise die übliche Federung sowie Dämpfung der relativ zum restlichen Fahrzeugkran beweglichen Räder 3a, 3b bzw. Fahrzeugachsen A1 bis A8 ermöglicht. Weiterhin kann diese bevorzugt eine Niveauregulierung aufweisen. Die hydropneumatische Federung 12 ist dabei in mehrere Kreise unterteilt. Dies meint, dass deren nicht näher gezeigten Hydraulikzylinder so untereinander fluidleitend verbunden sind, dass diese jeweils einem Federungskreis 13a, 13b zugeordnet sind. Bevorzugt kann die hydropneumatische Federung 12 einen Achslastausgleich innerhalb wenigstens eines Federungskreises 13a, 13b besitzen. Üblicher Weise sind die Federungskreise 13a, 13b aufgeteilt auf die rechten Räder 3a und die linken Räder 3b. Zusätzlich sind die Federungskreise 13a, 13b weiterhin einzelnen oder mehreren Achsen A1 bis A8 zugeordnet. Der zuvor beschriebene Fahrzeugkran 1 weist drei Bremskreise K1, K2.1 und K2.2 auf, denen jeweils die Achsen A1 und A2; A3 und A4 sowie A5 bis A8 zugeordnet sind. Insgesamt sind somit bevorzugt sechs Federungskreise 13a, 13b vorhanden, von denen jeweils die zugehörigen rechten und linken Federungskreise 13a, 13b jeweils einem der Bremskreise K1, K2.1 und K2.2 und somit den Achsen A1 und A2; A3 und A4 sowie A5 bis A8 zugeordnet sind. Hiermit werden die besten Regelungsergebnisse erzielt. Je Bremskreis K1, K2.1 und K2.2 können auch mehr als ein rechter und ein linker Federungskreis 13a, 13b vorgesehen sein. Dann empfiehlt es sich jedoch einen oder weitere automatisch lastabhängige/n Bremskraftregler 14 je Achsen A1 bis A8 und Federungskreise 13a, 13b vorzusehen. Auch können die mehr als zwei Federungskreise 13a, 13b je Bremskreis K1, K2.1 und K2.2 an nur einen vorhandenen automatisch lastabhängigen Bremskraftregler 14 angeschlossen werden. Deren Signale werden dann als arithmetisches Mittel verarbeitet. Die Bremse wird dadurch immer entsprechend der momentanen Achslast geregelt. Auch können die Federungskreise und die Bremskreise überlappen. Dies ist jedoch zu vermeiden, da hierdurch auch die Regelung anspruchsvoller wird.

Da die Bremsen einer Achse A1 bis A8 mit rechten und linken Rädern 3a, 3b in der Regel jeweils zwei Federungskreise 13a, 13b zugeordnet sind, ergibt sich die Achslast aus diesen zwei Federungskreisen 13a, 13b. Demnach wird der Bremsdruck über den automatisch lastabhängigen Bremskraftregler 14 entsprechend der Achslast geregelt. Zufällige Schwankungen der Radlasten zwischen rechten und linken Rädern 3a, 3b führen zu keiner Änderung der Bremskräfte. Nur wenn die Achslast als Ganzes sich ändert, wird auch der zugehörige Bremsdruck über den automatisch lastabhängigen Bremskraftregler 14 angepasst.

Herrscht in den Federungskreisen 13a, 13b je Bremskreis K1, K2.1 und K2.2 der volle Federungsdruck, stellt der zugehörige automatisch lastabhängige Bremskraftregler 14 dem jeweiligen Bremskreis K1, K2.1 und K2.2 den vollen Bremsdruck zur Verfügung. Des Weiteren sind die Federungskreise 13a, 13b und die Bremskreise K1, K2.1 und K2.2 fluidtechnisch getrennt und es findet kein Austausch der Fluide untereinander statt.

Erfindungsgemäß weist der Fahrzeugkran 1 einen oder mehrere automatisch lastabhängige/n Bremskraftregler 14 auf, welche/r in nachfolgend näher beschriebener Weise zwischen dem Bremssystem 5 und der hydropneumatischen Federung 12 integriert ist/sind. Die hydropneumatische Federung 12 ist ansteuerungsseitig mit dem automatisch lastabhängige/n Bremskraftregler 14 verbunden. Die Signale der beiden Federungskreise 13a, 13b werden von dem automatisch lastabhängigen Bremskraftregler 14 als arithmetisches Mittel verarbeitet. Vorliegend ist beispielhaft ein einzelner automatisch lastabhängiger Bremskraftregler 14 ersichtlich. Aufgrund der bei einem Fahrzeugkran 1 hohen erforderlichen Federungsdrücke ist der oder sind die automatisch lastabhängigen Bremskraftregler 14 für eine Druckbeaufschlagung bis mindestens 160 bar, bevorzugt bis 200 bar, in ihrem Regelbereich ausgelegt. Der vorgenannte Regelbereich ist auf einen Fahrzeugkran 1 im Straßenfahrbetrieb abgestimmt. Um den Fahrzeugkran 1 auch im Kranfahrbetrieb und somit beim Verfahren im aufgerüsteten Zustand und/oder unter Last betreiben zu können, ist der automatisch lastabhängigen Bremskraftreglers außerhalb beziehungsweise oberhalb seines Regelbereichs vor höheren Drücken geschützt. Dies kann einerseits dadurch erfolgen, dass der automatisch lastabhängigen Bremskraftreglers für eine Druckbeaufschlagung aus der hydropneumatischen Federung bis zu maximal 250 bar, bevorzugt von maximal 300 bar, insbesondere von maximal 350 bar, ausgelegt ist und andererseits dadurch, dass dem automatisch lastabhängigen Bremskraftregler ein Schutzventil mit entsprechenden Druckfestigkeiten vorzuschalten, das bei Drücken über 160 bar beziehungsweise 200 bar sperrt.

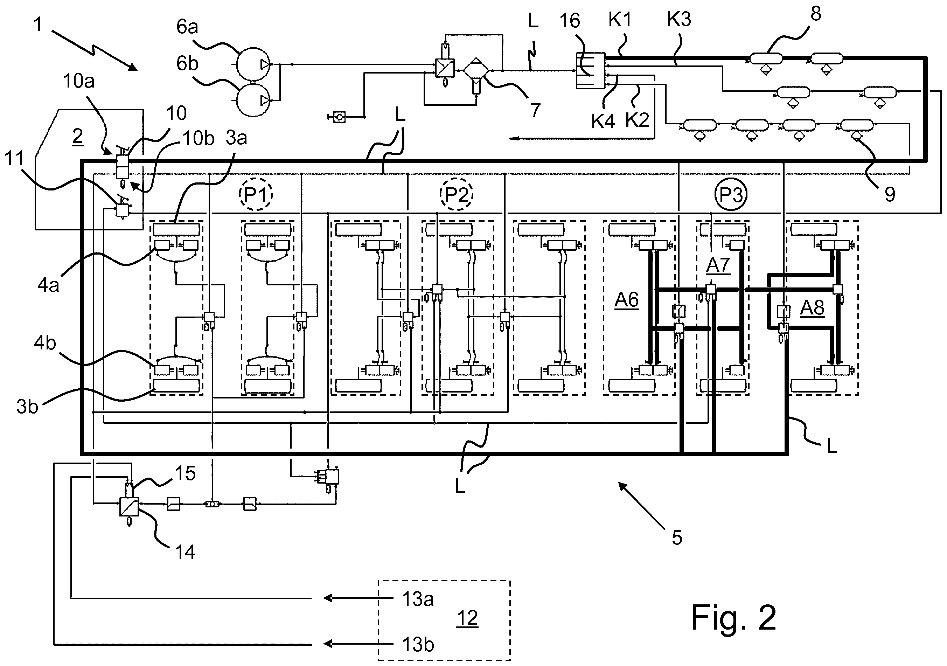

Figur 2 zeigt den bereits in Figur 1 ersichtlichen Fahrzeugkran 1, bei dem einer der beiden Bremskreise K1, K2 in Form eines hinteren Bremskreises K1 - mittels nunmehr dick dargestellter Linien - hervorgehoben ist. Erkennbar ist, dass der hintere Bremskreis K1 über Pneumatikleitungen L mit den Pneumatikpumpen 6a, 6b fluidleitend verbunden ist, die insbesondere von jenen den anderen Bremskreis K2 versorgenden Pneumatikleitungen L baulich getrennt sind. Dies gilt auch für die Eingliederung des Bremspedals 10, welches hierfür zwei voneinander getrennte Ventile 10a, 10b aufweist. Dabei ist der hintere Bremskreis K1 mit einem ersten Ventil des Bremspedals 10 verbunden, während der andere als vorderer Bremskreis K2 mit einem zweiten Ventil des Bremspedals 10 verbunden ist (siehe auch Figur 3). In dieser Ausgestaltung ist der hintere Bremskreis K1 den drei hinteren Fahrzeugachsen A6 bis A8 zugeordnet. Dies meint, dass bei Betätigung des Bremspedals 10 nur die an den hinteren drei Fahrzeugachsen A6 bis A8 angeordneten Radbremsen 4a, 4b ausschließlich durch den dann innerhalb des hinteren Bremskreises K1 entsprechend vorliegenden Bremsdruck angesteuert werden.

Figur 3 zeigt ebenfalls den bereits in Figur 1 und auch in Figur 2 ersichtlichen Fahrzeugkran 1, bei dem nunmehr der vordere Bremskreis K2 mit dick dargestellten Linien hervorgehoben ist. Um die abschnittsweise Unterteilung des vorderen Bremskreises K2 in den ersten und zweiten vorderen Bremskreisabschnitt K2.1, K2.2 zu verdeutlichen, ist dessen erster vorderer Bremskreisabschnitt K2.1 mit einer durchgehend dicken Linie angedeutet, während dessen zweiter vorderer Bremskreisabschnitt K2.2 mit einer demgegenüber unterbrochenen dicken Linie hervorgehoben ist. Erkennbar ist, dass der erste vordere Bremskreisabschnitt K2.1 den mittleren drei Fahrzeugachsen A3 bis A5 zugeordnet ist. Dies meint, dass bei Betätigung des Bremspedals 10 nur die an diesen mittleren drei Fahrzeugachsen A3 bis A5 angeordneten Radbremsen 4a, 4b ausschließlich durch den dann innerhalb des Abschnitts des vorderen Bremskreises K2 - in Form des ersten vorderen Bremskreisabschnitts K2.1 - vorliegenden Bremsdruck angesteuert werden, d.h. der Abschnitt K2.2 wird mit dem gleichen Druck wie K1 angesteuert aber durch den automatisch lastabhängigen Bremskraftregler 14 beeinflusst.

Weiterhin erkennbar ist, dass der andere Abschnitt des vorderen Bremskreises K2 - in Form des zweiten vorderen Bremskreisabschnitts K2.2 - den vorderen zwei Fahrzeugachsen A1, A2 zugeordnet ist. Dies meint, dass bei Betätigung des Bremspedals 10 nur die an den zwei vorderen Fahrzeugachsen A1, A2 angeordneten Radbremsen 4a, 4b ausschließlich durch den dann innerhalb des den automatisch lastabhängigen Bremskraftregler 14 beinhaltenden zweiten vorderen Bremskreisabschnitts K2.2 vorliegenden sowie durch diesen regelbaren Bremsdruck angesteuert werden.

Bei Betätigung des Bremspedals 10 werden die Radbremsen 4a, 4b der hier beispielhaft insgesamt acht Fahrzeugachsen A1 bis A8 gleichzeitig über ihren jeweiligen Bremskreis K1, K2 pneumatisch angesteuert. Hierbei werden die mit dem hinteren Bremskreis K1 und dem ersten vorderen Bremskreisabschnitt K2.1 (als Abschnitt des vorderen Bremskreises K2) verbundenen Radbremsen 4a, 4b direkt über das Bremspedal angesteuert. Erfindungsgemäß ist der automatisch lastabhängige Bremskraftregler 14 dabei mit dem zweiten vorderen Bremskreisabschnitt K2.2 (in Form eines Abschnitts des vorderen Bremskreises K2) derart wirkverbunden, dass auf Basis eines aus der hydropneumatischen Federung 12 erzeugbaren Gewichtszustandssignals des Fahrzeugkrans 1 ein innerhalb des zweiten vorderen Bremskreisabschnitts K2.2 über den automatisch lastabhängigen Bremskraftregler 14 regelbarer Bremsdruck P1 gegenüber den zeitgleich innerhalb des ersten vorderen Bremskreisabschnitts K2.1 und des hinteren Bremskreises K1 erzeugbaren Bremsdrücken P2, P3 veränderbar ist. Hierzu weist der automatisch lastabhängige Bremskraftregler 14 einen mit den relevanten Federungskreisen 13a, 13b der hydropneumatischen Federung 12 fluidleitend gekoppelten Regelungseingang 15 auf, so dass deren jeweiliger Druck als das zur Ansteuerung des automatisch lastabhängigen Bremskraftreglers 14 dienende Gewichtszustandssignal verwendbar ist.

Die bauliche Ausgestaltung und/oder Einstellung kann dabei so gewählt sein, dass der innerhalb des zweiten vorderen Bremskreisabschnitts K2.2 vorliegende Bremsdruck P1 ohne eine Veränderung durch den automatisch lastabhängigen Bremskraftregler 14 dem zeitgleich innerhalb des ersten vorderen Bremskreisabschnitts K2.1 vorliegenden Bremsdruck P2 entspricht. Die Bremsdrücke P1, P2 - im sich aus den ersten und zweiten vorderen Bremskreisabschnitten K2.1, K2.2 zusammensetzenden vorderen Bremskreis K2 - können dabei dem zeitgleich im hinteren Bremskreis K1 vorherrschenden Bremsdruck P3 entsprechen oder von diesem abweichen.

### Bezugszeichenliste

1 Fahrzeugkran
2 Fahrzeugkabine
3a Rad, rechts
3b Rad, links
4a Radbremse, rechts
4b Radbremse, links
5 Bremssystem
6a Pneumatikpumpe
6b Pneumatikpumpe
7 Lufttrockner
8 Luftbehälter
9 Abscheider
10 Bremspedal
10a Ventil
10b Ventil
11 Hebel
12 hydropneumatische Federung
13a Federungskreis, rechts
13b Federungskreis, links
14 automatisch lastabhängiger Bremskraftregler
15 Regelungseingang
16 Schutzventil
A1 Fahrzeugachse, vorn
A2 Fahrzeugachse, vorn
A3 Fahrzeugachse, Mitte
A4 Fahrzeugachse, Mitte
A5 Fahrzeugachse, Mitte
A6 Fahrzeugachse, hinten
A7 Fahrzeugachse, hinten
A8 Fahrzeugachse, hinten
K1 Bremskreis, hinten
K2 Bremskreis, vorn
K2.1 Bremskreisabschnitt, erster vorn
K2.2 Bremskreisabschnitt, zweiter vorn
K3 Bremskreis, dritter
K4 Druckkreis
L Pneumatikleitung
P1 Bremsdruck
P2 Bremsdruck
P3 Bremsdruck

## Patentansprüche

1. Fahrzeugkran (1) mit hydropneumatischer Federung (12) und mit einem Radbremsen (4a, 4b) umfassenden Bremssystem (5), welches einen den Radbremsen (4a, 4b) mindestens einer Fahrzeugachse (A6, A7, A8) zugeordneten ersten Bremskreis (K1) und wenigstens einen den Radbremsen (4a, 4b) mindestens einer weiteren Fahrzeugachse (A1, A2, A3, A4, A5) zugeordneten zweiten Bremskreis (K2) besitzt, **dadurch gekennzeichnet, dass** die hydropneumatische Federung (12) mit wenigstens einem automatisch lastabhängigen Bremskraftregler (14) gekoppelt ist, welcher mit einem der Bremskreise (K1, K2) oder einem ihrer Bremskreisabschnitte (K2.1, K2.2) derart wirkverbunden ist, dass auf Basis eines aus der hydropneumatischen Federung (12) erzeugbaren Gewichtszustandssignals des Fahrzeugkrans (1) ein innerhalb des mit dem automatisch lastabhängigen Bremskraftregler (14) gekoppelten Bremskreises (K2) oder Bremskreisabschnitts (K2.2) erzeugbarer Bremsdruck (P1) gegenüber einem zeitgleich innerhalb des anderen Bremskreises (K1) oder Bremskreisabschnitts (K2.1) erzeugbaren Bremsdrucks (P2, P3) veränderbar ist, wobei der innerhalb des mit dem automatisch lastabhängigen Bremskraftregler (14) gekoppelten Bremskreises (K2) oder Bremskreisabschnitts (K2.2) erzeugbare Bremsdruck (P1) ohne eine Veränderung durch den automatisch lastabhängigen Bremskraftregler (14) dem zeitgleich innerhalb des anderen Bremskreises (K1) und/oder Bremskreisabschnitts (K2.1) erzeugbaren Bremsdruck (P2, P3) entspricht, wobei der innerhalb des mit dem automatisch lastabhängigen Bremskraftregler (14) gekoppelten Bremskreises (K2) oder Bremskreisabschnitts (K2.2) erzeugbare Bremsdruck (P1) durch den automatisch lastabhängigen Bremskraftregler (14) gegenüber dem Wert des innerhalb des anderen Bremskreises (K1) und/oder Bremskreisabschnitts (K2.1) zeitgleich erzeugbaren Bremsdrucks (P2, P3) regelbar, insbesondere reduzierbar, ist.

2. Fahrzeugkran (1) nach Anspruch 1, **dadurch gekennzeichnet, dass** an dem automatisch lastabhängigen Bremskraftregler (14) ein Regelungseingang (15) angeordnet ist, welcher derart fluidleitend mit der hydropneumatischen Federung (12) gekoppelt ist, dass deren jeweiliger Druck als das zur Ansteuerung des automatisch lastabhängigen Bremskraftreglers (14) dienende Gewichtszustandssignal verwendbar ist.

3. Fahrzeugkran (1) nach Anspruch 2, **dadurch gekennzeichnet, dass** dem Regelungseingang (15) mindestens ein Federungskreis (13a, 13b) der hydropneumatischen Federung (12) zugeordnet ist und dieser mindestens eine Federungskreis (13a, 13b) auch zumindest einen Teil der Fahrzeugachsen (A1 bis A8) zugeordnet ist, die dem jeweiligen automatisch lastabhängigen Bremskraftregler (14) zugeordnet sind.

4. Fahrzeugkran (1) nach Anspruch 3, **dadurch gekennzeichnet, dass** der mindestens eine Federungskreis (13a, 13b) genau den Fahrzeugachsen (A1 bis A8) zugeordnet ist, die dem jeweiligen automatisch lastabhängigen Bremskraftregler (14) zugeordnet sind.

5. Fahrzeugkran (1) nach einem der vorhergehenden Ansprüche, **dadurch gekennzeichnet, dass** der automatisch lastabhängige Bremskraftregler (14) ansteuerungsseitig an die hydropneumatische Federung (12) angeschlossen ist und einen Regelbereich bis maximal 160 bar, bevorzugt 200 bar, aufweist.

6. Fahrzeugkran (1) nach Anspruch 5, **dadurch gekennzeichnet, dass** der automatisch lastabhängige Bremskraftregler (14) außerhalb seines Regelbereichs eine Druckfestigkeit bis maximal 250 bar, bevorzugt 300 bar und besonders bevorzugt von 350 bar, aufweist beziehungsweise dem automatisch lastabhängigen Bremskraftregler (14) ein Schutzventil mit entsprechenden Druckfestigkeiten vorgeschaltet ist.

7. Fahrzeugkran (1) nach einem der vorhergehenden Ansprüche, **dadurch gekennzeichnet, dass** der mit dem automatisch lastabhängigen Bremskraftregler (14) wirkverbundene Bremskreis (K2) oder Bremskreisabschnitt (K2.2) einer oder mehreren, insbesondere vorderen, Fahrzeugachsen (A1 bis A5) zugeordnet ist.

8. Fahrzeugkran (1) nach einem der vorhergehenden Ansprüche, **dadurch gekennzeichnet, dass** die hydropneumatische Federung (12) eine Niveauregulierung aufweist.

9. Fahrzeugkran (1) nach einem der vorhergehenden Ansprüche, **dadurch gekennzeichnet, dass** die hydropneumatische Federung (12) einen Achslastausgleich innerhalb eines Federungskreises (13a, 13b) aufweist.

10. Fahrzeugkran (1) nach einem der vorhergehenden Ansprüche, **dadurch gekennzeichnet, dass** zwei oder mehr automatisch lastabhängige Bremskraftregler (14) vorgesehen sind, wobei jeder dieser automatisch lastabhängigen Bremskraftregler (14) mit einem der Bremskreise (K1, K2) oder Bremskreisabschnitte (K2.1, K2.2) gekoppelt ist.

11. Fahrzeugkran (1) nach Anspruch 10, **dadurch gekennzeichnet, dass** die automatisch lastabhängigen Bremskraftregler (14) gleich oder voneinander unterschiedlich eingestellt sind, insbesondere in Bezug auf deren Regelung und/oder Ansprechverhalten.

12. Fahrzeugkran (1) nach einem der vorhergehenden Ansprüche, **dadurch gekennzeichnet, dass** das Bremssystem (5) pneumatisch ist.

13. Fahrzeugkran (1) nach einem der vorhergehenden Ansprüche, **dadurch gekennzeichnet, dass** die Anzahl der Fahrzeugachsen (A1 bis A8) mindestens drei ist.

14. Fahrzeugkran (1) nach einem der vorhergehenden Ansprüche, **dadurch gekennzeichnet, dass** die Anzahl der Bremskreise (K1, K2) oder Bremskreisabschnitte (K2.1, K2.2) größer ist als die Anzahl der automatisch lastabhängigen Bremskraftregler (14).

## Claims

1. Vehicle crane (1) comprising hydropneumatic suspension (12) and comprising a braking system (5) having wheel brakes (4a, 4b) and having a first braking circuit (K1) assigned to the wheel brakes (4a, 4b) of at least one vehicle axle (A6, A7, A8) and at least a second braking circuit (K2) assigned to the wheel brakes (4a, 4b) of at least one further vehicle axle (A1, A2, A3, A4, A5),**characterised in that** the hydropneumatic suspension (12) is coupled to at least one automatic load-dependent braking force regulator (14) which is operatively connected to one of the braking circuits (K1, K2) or one of the braking circuit portions (K2.1, K2.2) thereof such that, on the basis of a weight state signal of the vehicle crane (1) which can be generated from the hydropneumatic suspension (12), a braking pressure (P1) which can be generated within the braking circuit (K2) or braking circuit portion (K2.2) coupled to the automatic load-dependent braking force regulator (14) can be changed in relation to a braking pressure (P2, P3) which can be generated simultaneously within the other braking circuit (K1) or braking circuit portion (K2.1), wherein the braking pressure (P1) that can be generated within the braking circuit (K2) or braking circuit portion (K2.2) coupled to the automatic load-dependent braking force regulator (14) corresponds to the braking pressure (P2, P3) that can be generated simultaneously within the other braking circuit (K1) and/or braking circuit portion (K2.1) without being changed by the automatically load-dependent braking force regulator (14), wherein the braking pressure (P1) that can be generated within the braking circuit (K2) or braking circuit portion (K2.2) coupled to the automatic load-dependent braking force regulator (14) can be regulated, in particular can be reduced, by the automatic load-dependent braking force regulator (14) compared with the value of the braking pressure (P2, P3) that can be generated simultaneously within the other braking circuit (K1) and/or braking circuit portion (K2.1).

2. Vehicle crane (1) according to claim 1, **characterised in that** a regulation input (15) is arranged on the automatic load-dependent braking force regulator (14), which regulation input is fluid-conductingly coupled to the hydropneumatic suspension (12) such that the relevant pressure thereof can be used as the weight state signal serving to control the automatic load-dependent braking force regulator (14).

3. Vehicle crane (1) according to claim 2, **characterised in that** at least one suspension circuit (13a, 13b) of the hydropneumatic suspension (12) is assigned to the regulation input (15), and this at least one suspension circuit (13a, 13b) is also assigned to at least some of the vehicle axles (A1 to A8) which are assigned to the relevant automatic load-dependent braking force regulator (14).

4. Vehicle crane (1) according to claim 3, **characterised in that** the at least one suspension circuit (13a, 13b) is assigned precisely to the vehicle axles (A1 to A8) which are assigned to the relevant automatic load-dependent braking force regulator (14).

5. Vehicle crane (1) according to any of the preceding claims, **characterised in that** the automatic load-dependent braking force regulator (14) is connected on the control side to the hydropneumatic suspension (12) and has a regulating range of up to a maximum of 160 bar, preferably 200 bar.

6. Vehicle crane (1) according to claim 5, **characterised in that** the automatic load-dependent braking force regulator (14) has a pressure resistance outside the regulating range thereof of up to a maximum of 250 bar, preferably 300 bar and particularly preferably 350 bar, or a protection valve with corresponding pressure resistance is connected upstream of the automatic load-dependent braking force regulator (14).

7. Vehicle crane (1) according to any of the preceding claims, **characterised in that** the braking circuit (K2) or braking circuit portion (K2.2) operatively connected to the automatic load-dependent braking force regulator (14) is assigned to one or more, in particular front, vehicle axles (A1 to A5).

8. Vehicle crane (1) according to any of the preceding claims, **characterised in that** the hydropneumatic suspension (12) has a levelling system.

9. Vehicle crane (1) according to any of the preceding claims, **characterised in that** the hydropneumatic suspension (12) has an axle load compensation within a suspension circuit (13a, 13b).

10. Vehicle crane (1) according to any of the preceding claims, **characterised in that** two or more automatic load-dependent braking force regulators (14) are provided, wherein each of these automatic load-dependent braking force regulators (14) is coupled to one of the braking circuits (K1, K2) or braking circuit portions (K2.1, K2.2).

11. Vehicle crane (1) according to claim 10, **characterised in that** the automatic load-dependent braking force regulators (14) are set to be the same or different from one another, in particular with regard to their regulation and/or response behaviour.

12. Vehicle crane (1) according to any of the preceding claims, **characterised in that** the braking system (5) is pneumatic.

13. Vehicle crane (1) according to any of the preceding claims, **characterised in that** the number of vehicle axles (A1 to A8) is at least three.

14. Vehicle crane (1) according to any of the preceding claims, **characterised in that** the number of braking circuits (K1, K2) or braking circuit portions (K2.1, K2.2) is greater than the number of automatic load-dependent braking force regulators (14).

## Revendications

1. Véhicule-grue (1) à suspension hydropneumatique (12) et système de freinage (5) comprenant des freins de roue (4a, 4b), avec un premier circuit de freinage (K1) associé aux freins de roue (4a, 4b) d'au moins un essieu de véhicule (A6, A7, A8) et au moins un second circuit de freinage (K2) associé aux freins de roue (4a, 4b) d'au moins un autre essieu de véhicule (A1, A2, A3, A4, A5), véhicule-grue **caractérisé en ce que** la suspension hydropneumatique (12) est couplée à au moins un régulateur de force de freinage automatique (14) dépendant de la charge, qui est relié à l'un des circuits de freinage (K1, K2) ou à l'un de leur segment de circuit de freinage (K2.1, K2.2), sur le fondement d'un signal d'état de poids obtenu à partir de la suspension hydropneumatique (12) du véhicule-grue (1), une pression de freinage (P1) est générée dans le circuit de freinage (K2) ou segment de circuit de freinage (K2.2) couplé au régulateur de force de freinage (14) automatique dépendant de la charge, qui peut être modifiée dans le temps par rapport à une pression de freinage (P2, P3) d'un autre circuit de freinage (K1) ou segment de circuit de freinage (K2.1), la pression de freinage (P1) générée dans le circuit de freinage (K2) ou le segment de circuit de freinage (K2.2) couplé au régulateur de force de freinage automatique dépendant de la charge (14) correspondant, modification par le régulateur de force de freinage automatique (14) dépendant de la charge, à la pression de freinage (P2, P3) générée dans le temps dans l'autre circuit de freinage (K1) et/ou segment de circuit de freinage (K2.1), la pression de freinage (P1) générée dans le circuit de freinage (K2) ou le segment de circuit de freinage (K2.2) couplé au régulateur de force de freinage automatique (14) dépendant de la charge, peut être réglée notamment réduite par le régulateur de force de freinage automatique (14) dépendant de la charge, par rapport à la valeur de la pression de freinage (P2, P3) générée simultanément dans l'autre circuit de freinage (K1) et/ou segment de circuit de freinage (K2.1).

2. Véhicule-grue (1) selon la revendication 1, **caractérisé par** une entrée de régulation (15) sur le régulateur de force de freinage, automatique (14) dépendant de la charge, qui est couplée en liaison fluidique avec la suspension hydropneumatique (12) de façon que leur pression respective soit utilisée comme signal d'état de poids servant à la commande du régulateur de force de freinage automatique (14) dépendant de la charge.

3. Véhicule-grue (1) selon la revendication 2, **caractérisé en ce que** au moins un circuit de suspension (13a, 13b) de la suspension hydropneumatique (12) est appliqué à l'entrée de régulation (15) et au moins ce circuit de suspension (13a, 13b) est associé à au moins une partie des essieux de véhicule (A1-A8) associés au régulateur de force de freinage automatique (14) respectif dépendant de la charge.

4. Véhicule-grue (1) selon la revendication 3, **caractérisé en ce que** au moins le circuit de suspension (13a, 13b) est associé précisément aux essieux de véhicule (A1-A8) qui sont associés au régulateur de force de freinage automatique (14) dépendant de la charge, respectif.

5. Véhicule-grue (1) selon l'une des revendications précédentes, **caractérisé en ce que** le régulateur de force de freinage, automatique (14) dépendant de la charge est relié, côté commande, à la suspension hydropneumatique (12) et à une plage de régulation allantjusqu'à160 bars et de préférence 200 bars.

6. Véhicule-grue (1) selon la revendication 5, **caractérisé en ce que** le régulateur de force de freinage, automatique (14) dépendant de la charge a, au-delà de sa plage de régulation, une tenue en pression allant au maximum jusqu'à 250 bars, de préférence 300 bars et d'une manière particulièrement préférentielle, de 350 bars, ou encore le régulateur de force de freinage automatique (14) dépendant de la charge est une soupape de protection ayant une tenue en pression correspondante.

7. Véhicule-grue (1) selon l'une des revendications précédentes, **caractérisé en ce que** le circuit de freinage (K2) ou le segment de circuit de freinage (K2.2) coopérant avec le régulateur de force de freinage automatique (14) dépendant de la charge est associé à un ou plusieurs essieux de véhicule (A1-A5), notamment aux essieux avant.

8. Véhicule-grue (1) selon l'une des revendications précédentes, **caractérisé en ce que** la suspension hydropneumatique (12) a une régulation de niveau.

9. Véhicule-grue (1) selon l'une des revendications précédentes, **caractérisé en ce que** la suspension hydropneumatique (12) a une compensation de charge d'essieu dans un circuit de suspension (13a, 13b).

10. Véhicule-grue (1) selon l'une des revendications précédentes, **caractérisé en ce que** il comprend deux ou plusieurs régulateurs de force de freinage automatiques (14) dépendant de la charge, et chacun de ces régulateurs de force de freinage automatiques (14) dépendant de la charge est couplé à l'un des circuits de freinage (K1, K2) ou segment de circuit de freinage (K2.1, K2.2).

11. Véhicule-grue (1) selon la revendication 10, **caractérisé en ce que** les régulateurs de force de freinage automatiques (14) dépendant de la charge sont réglés de façon identique ou différente, en particulier, en fonction de la régulation et/ou de leur réponse.

12. Véhicule-grue (1) selon l'une des revendications précédentes, **caractérisé en ce que** le système de freinage (5) est pneumatique.

13. Véhicule-grue (1) selon l'une des revendications précédentes, **caractérisé en ce que** le nombre d'essieux de véhicule (A1-A8) est au moins égal à trois.

14. Véhicule-grue (1) selon l'une des revendications précédentes, **caractérisé en ce que** le nombre de circuits de freinage (K1, K2) ou de segments de circuit de freinage (K2.1, K2.2) est supérieur au nombre de régulateurs de force de freinage automatiques (14) dépendant de la charge.
